(19) Europäisches Patentamt
European Patent Office
Office européen des brevets

(11) **EP 4 600 029 A1**

(12) **EUROPEAN PATENT APPLICATION**
published in accordance with Art. 153(4) EPC

(43) Date of publication:
**13.08.2025 Bulletin 2025/33**

(21) Application number: **23876597.8**

(22) Date of filing: **08.10.2023**

(51) International Patent Classification (IPC):
**B29C 70/30** (2006.01)

(52) Cooperative Patent Classification (CPC):
**B29C 70/16; B29C 70/30**

(86) International application number:
**PCT/CN2023/123291**

(87) International publication number:
**WO 2024/078395 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.10.2022 CN 202211236283**

(71) Applicant: **Shanghai Aircraft Manufacturing Co., Ltd.**
**Shanghai 201324 (CN)**

(72) Inventors:
- **ZHAO, Xinfu**
  **Shanghai 201324 (CN)**
- **LI, Yongxing**
  **Shanghai 201324 (CN)**
- **CAI, Zhiqiang**
  **Shanghai 201324 (CN)**
- **PAN, Jie**
  **Shanghai 201324 (CN)**
- **ZHANG, Chuanyuan**
  **Shanghai 201324 (CN)**
- **LI, Zhiyuan**
  **Shanghai 201324 (CN)**
- **YUAN, Chongxin**
  **Shanghai 201324 (CN)**
- **ZHANG, Dieqin**
  **Shanghai 201324 (CN)**

(74) Representative: **Canzler & Bergmeier Patentanwälte**
**Partnerschaft mbB**
**Despag-Straße 6**
**85055 Ingolstadt (DE)**

(54) **METHOD FOR OPTIMIZING PARAMETERS IN AUTOMATED PREPREG TOW PLACEMENT PROCESS**

(57)     The present invention provides a method for optimizing parameters in the automated prepreg tow placement process on a large-curvature curved surface structure. The method comprises: establishing a function relationship between the placement pressure on a planar structure and the pressure depth of a pressing roller on the basis of a selected pressing roller material; dividing each layer into a plurality of strips, each strip being formed from a plurality of prepreg tows; projecting the central axis of the pressing roller on the strip to obtain a projection line, wherein for each strip, the point of intersection of the projection line and the trajectory of the strip is a first point of intersection, and the point of intersection of the projection line and the central line of each prepreg tow is a second point of intersection, and according to a reference placement pressure at the first point of intersection, obtaining a reference pressure depth at the first point of intersection, and a pressure depth and a placement pressure at the second point of intersection by using the function relationship; obtaining the range between the placement pressures and an average placement pressure on the strips according to the placement pressures at the first point of intersection and the second point of intersection; and establishing a uniformity function of the placement pressures on the strips, and adjusting the uniformity of the placement pressures on the strips according to the uniformity function.

EP 4 600 029 A1

Establishing a functional relationship between a placement
pressure and an indent depth of a press roller

Dividing each layer into a plurality of strips
and obtaining a trajectory line of each strip

Determining a reference placement pressure and a reference indent depth at intersecti
on points of a projection line of a central axis of a press roller and the trajectory line

Determining an indent depth and a placement pressure at intersection
points of the projection line and center lines of prepreg fiber tows

Establishing a uniformity function of the placement pressure on each strip,
and optimizing the uniformity of the placement pressure on the strip

Fig. 4

**Description**

**FIELD**

The present disclosure relates to the field of manufacturing composite structural components and more specifically, to a method for optimizing parameters in an automated placement process of prepreg fiber tows on a curved-surface structure having a large curvature.

BACKGROUND

Due to advantages of the automated fiber placement technology such as a high material utilization rate and a large degree of freedom in placement, it has been widely used in the production of composite structural components in the aerospace field. A process of manufacturing a composite structural component by using the automated fiber placement technology is that, under the control of an automated fiber placement machine, a placement head of the automated fiber placement machine gathers a plurality of prepreg fiber tows made of a composite material into a strip under a pressure of a press roller according to layers, direction and thickness determined by design requirements, and lays the strip on a mold according to a trajectory line of the strip planned by a computer, thereby completing the automated placement of the layers of the composite structural components, and after heating and softening the layers, the heated and softened layers are compacted and cured to form the composite structural components.

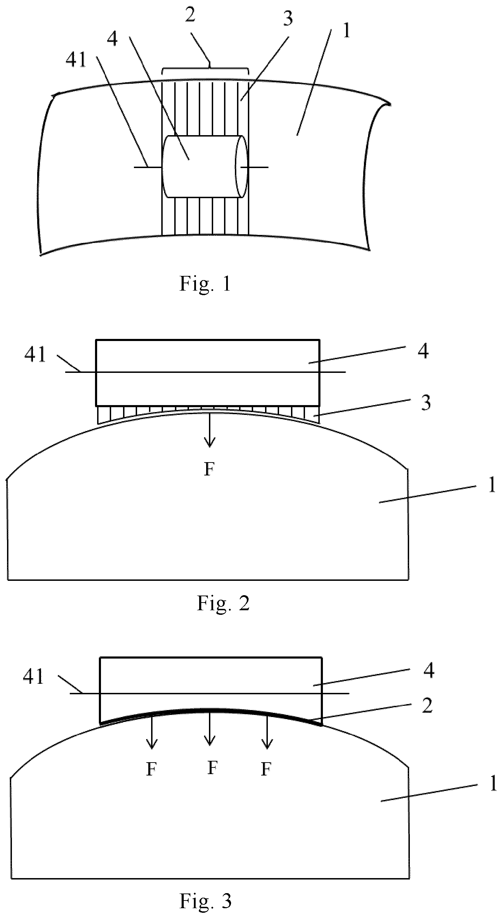

However, as shown in FIGS. 1-3, for a curved-surface structure having a large curvature, such as a leading-edge panel structure or a doubly-curved panel structure of airfoils, the press roller 4 conforms to the curved shape of a curved surface 1 during the placement process. Therefore, as shown in FIGS. 2-3, for each strip 2, the press roller 4 generates a relatively larger indent depth and a relatively larger placement pressure F on the prepreg fiber tows 3 closer to a central axis 41 of the press roller 4, and generates a relatively smaller indent depth and a smaller placement pressure F on the prepreg fiber tows 3 far away from the central axis 41. This results in a non-uniform distribution of placement pressure and forming pressure on the prepreg fiber tows 3 in the strip 2 along the central axis 41 of the press roller 4.

Currently, in a preforming process of automated fiber placement of the similar curved-surface structure having large curvatures, the engineers or designers usually first set the number of prepreg fiber tows 3 in the strip 2 during a programming phase based on engineering experience, and then perform multiple times of actual trial placements to finally determine the optimal number of prepreg fiber tows 3 in the strip 2, thereby obtaining a strip 2 with a uniform distribution of the forming pressure. Furthermore, during the period of practical trial placements, the placement pressure or the heating temperature for placing and fitting the tows may be increased to improve the fitting quality between prepreg fiber tows 3 and the curved surface 1 at edges of the strip. However, raising the heating temperature for placing and fitting the tows will cause the increase of the aging tendency of the fiber materials, and the increase of the placement pressure will also cause a large deformation of the fibres of the prepreg fiber tows 3 near the central axis 41 of the press roller 4, thereby affecting the placement and the quality of the formed composite structural components.

Meanwhile, in order to improve the placement and the fitting quality by increasing the placement pressure and the placing and fitting temperature, it on the one hand requires verification through multiple trial placements, and on the other hand, will cause uneven force and heat distribution on the whole curved-surface structure, thereby exerting a certain impact on the final performance of the resultant composite structural components.

SUMMARY

Therefore, the technical problem to be solved by the present disclosure is to overcome the problems about uneven distribution of the placement pressure and the forming pressure on the prepreg fiber tows in the strip used for forming a curved surface structure having a large curvature in the conventional automated fiber placement technology. Thus, the present disclosure provides a method for optimizing parameters in an automated placement process of prepreg fiber tows on a curved surface structure having a large curvature. According to this method, the placement pressure exerted on the prepreg fiber tows of the strip can be analyzed by establishing a functional relationship between a placement pressure and an indent depth of a press roller on a plane structure, so that a uniformity function of the placement pressure of the strips in a single layer can be obtained. The optimized number of prepreg fiber tows of the strip is then obtained by using the uniformity function, so that strips with uniform distribution of the placement pressure can be produced.

Specifically, the present disclosure provides a method for optimizing parameters in an automated placement process of prepreg fiber tows on a curved surface structure having a large curvature, wherein the method comprises the steps of:

establishing a functional relationship between a placement pressure and an indent depth of a press roller by automatically placing fibers on a planar structure based on composition and performance of a selected material of the press roller;

dividing each layer into a plurality of strips by means of a computer, wherein a trajectory line of each of the strips corresponds to a path that is followed by an automated fiber placement machine to complete the placement of the strips, and wherein each of the strips is formed by a plurality of prepreg fiber tows arranged side by side;

projecting a central axis of the press roller onto the plurality of strips so as to obtain a projection line of the central axis of the press roller, wherein, for each of the strips, an intersection point of the projection line and the trajectory line of the strip is set as a first intersection point, the placement pressure at the first intersection point is set as a reference placement pressure, and a reference indent depth at the first intersection point is obtained by using the functional relationship between the placement pressure and the indent depth of the press roller;

setting an intersection point of the projection line and a center line of each prepreg fiber tow of the strip as a second intersection point, and based on the reference indent depth, calculating the indent depth at the second intersection point according to a distance between the second intersection point and the first intersection point, and then obtaining a placement pressure corresponding to the indent depth at the second intersection point using the functional relationship between the placement pressure and the indent depth of the press roller;

obtaining a maximum-minimum difference of the placement pressures and an average placement pressure on the strip according to the placement pressures at the first intersection point and at the second intersection point;

establishing a uniformity function of the placement pressure on each strip by using a ratio of the maximum-minimum difference of the placement pressures to the average placement pressure, and optimizing the uniformity of the placement pressure on the strip according to the uniformity function.

According to one embodiment of the present disclosure, a material of the press roller is an elastomeric material having elasticity.

According to another embodiment of the present disclosure, each layer is divided into a plurality of strips by using an automated fiber placement software or other fiber placement trajectory programming software in order to generate the trajectory line of each strip and a fiber placement trajectory which is used for placing the prepreg fiber tows and corresponds to the center line of each prepreg fiber tow in each strip.

According to a further embodiment of the present disclosure, the plurality of strips corresponding to each layer are divided according to the shape and size of the curved-surface structure having a large curvature and the shape and size of the press roller, and then the trajectory line of each strip is generated accordingly.

According to a further embodiment of the present disclosure, the shape and size of the curved-surface structure having a large curvature comprises a length, a width and a curvature of the curved surface, and the shape and size of the press roller comprises a length and a radius of the press roller.

According to a further embodiment of the present disclosure, the trajectory line of each strip is configured to coincide with the center line of each strip.

According to a further embodiment of the present disclosure, the step of forming a projection line of the central axis of the press roller comprises:
selecting any point on the trajectory line of the strip as a reference point, making a normal vector of the curved surface and a tangent vector of the trajectory line at the reference point, and constructing a section plane of the central axis of the press roller according to the normal vector, the tangent vector and the central axis of the press roller, wherein an intersection line between the section plane and the strip is the projection line.

According to a further embodiment of the present disclosure, the reference point is set as a geometrical center point of the strip.

According to a further embodiment of the present disclosure, the reference placement pressure is set to a maximum placement pressure on the strip.

According to a further embodiment of the present disclosure, the projection line intersects the plurality of prepreg fiber tows in each strip to form a plurality of second intersection points.

According to a further embodiment of the present disclosure, the step of obtaining the indent depth at the second intersection point comprises:
calculating a distance component of a distance between the second intersection point and the first intersection point in a vertical plane of a Cartesian coordinate system, and subtracting the distance component from the indent depth at the first intersection point to obtain the indent depth at the second intersection point.

According to a further embodiment of the present disclosure, the step of optimizing the uniformity of the placement pressure on each strip according to the uniformity function comprises:

changing the number of the second intersection points by adjusting the number of the plurality of prepreg fiber tows forming each strip, thereby changing the value of the maximum-minimum difference of the placement pressures and the average placement pressure value on each strip, such that the distribution of the placement pressure on each strip is uniform.

According to a further embodiment of the present disclosure, the value of the maximum-minimum difference of the placement pressures is a difference value between a maximum value and a minimum value of the placement pressure values at the first intersection point and the second intersection points, and the average placement pressure value is a ratio of a sum of the placement pressure values at the first intersection point and the second intersection points to a number of intersection points comprising the first intersection point and the second intersection points.

According to a further embodiment of the present disclosure, the method further comprises: optimizing the distribution of the placement pressure on the strip by adjusting the number of the prepreg fiber tows of the strip at a position with a relatively larger curvature according to the uniformity function, and appropriately increasing the number of the prepreg fiber tows of the strip at a position with a relatively smaller curvature according to the optimized number of the prepreg fiber tows of the strip at the position with the relatively larger curvature, to optimize the distribution of the placement pressure on the strip at the position with a relatively smaller curvature using the uniformity function.

According to a further embodiment of the present disclosure, the method further comprises: laying the optimized plurality of strips side by side to form a layer with a uniform distribution of the placement pressure, and laying and compacting a plurality of layers one by one, so that the curved-surface structure having a large curvature with uniform distribution of the placement pressure is obtained.

According to a further embodiment of the present disclosure, the forming pressure at the first intersection point and/or the second intersection point is a component of the placement pressure in a normal direction of the curved surface at the first intersection point and/or the second intersection point.

Preferred embodiments of the present disclosure may be obtained by arbitrarily combining the above preferred embodiments on the basis of complying with common knowledge in the art.

Positive and advantageous benefits of the above-described embodiments of the present disclosure are as follows:

1. The functional relationship between the placement pressure and the indent depth of the press roller can be established through the plane structure;

2. The uniformity function of the placement pressure of the strips is established by analyzing the placement pressure exerted on the prepreg fiber tows of the strips forming the curved structure;

3. The number of the prepreg fiber tows of the strip can be adjusted through the established uniformity function of the placement pressure, so as to improve the uniformity of the placement pressure and/or the forming pressure of the prepreg fiber tows of the entire curved-surface structure from a perspective of a single layer, thereby significantly improving the actual placement quality and facilitating the manufacture of composite structural components with a higher quality;

4. The number of the prepreg fiber tows of the other strips can be adjusted based on the optimized number of the prepreg fiber tows of the strips at the position with a relatively larger curvature, so that the uniformity of the placement pressure of the strips of each layer is optimized, and meanwhile the times of trial placements can be effectively reduced.

## BRIEF DESCRIPTION OF THE DRAWINGS

FIG. 1 is a schematic view of automated placement of prepreg fiber tows on a curved-surface structure having a large curvature according to a preferred embodiment of the present disclosure.

Fig. 2 is a schematic view of automated placement of prepreg fiber tows on a curved-surface structure having a large curvature according to a preferred embodiment of the present disclosure.

FIG. 3 is a schematic view of automated placement of prepreg fiber tows on a curved-surface structure having a large curvature according to a preferred embodiment of the present disclosure.

FIG. 4 is a flow chart of a method for optimizing parameters in an automated placement process of prepreg fiber tows on a curved-surface structure having a large curvature according to a preferred embodiment of the present disclosure.

FIG. 5 is a schematic view of a projection line of a central axis of a press roller on a strip in the method shown in FIG. 4.

FIG. 6 is a schematic view of an indent depth at a first intersection and at a second intersection on the strip in the method shown in FIG. 4.

FIG. 7 is a schematic view of a placement pressure and a forming pressure at the first intersection and the second intersection on the strip in the method shown in FIG. 4.

## DETAILED DESCRIPTION OF EMBODIMENTS

To make the objectives, technical solutions and advantages of the present application more apparent, the technical solutions in embodiments of the present application will be described clearly and completely below with reference to the accompanying drawings which illustrate multiple embodiments of the present application. It should be appreciated that the described embodiments are only partial embodiments, not all embodiments of the present application. Based on the embodiments described in the present application, all the other embodiments obtained by a person of ordinary skill in the art without involving any inventive efforts will fall within the scope of protection of the present application.

Unless defined otherwise, all technical and scientific terms used herein have the same meaning as commonly understood by those skilled in the art to which the present application belongs; the terms used in the description of the present application herein are only intended to describe specific embodiments and not to limit the present application; the terms "include", "have", and the like in the description, claims and the above brief description of the drawings of the present application are used as open-ended terms. Thus, for example, "including one or more steps" or "having one or more steps" means having one or more steps, but not limited to only having one or more steps. The terms "first", "second" and the like in the specification and the claims of the present application as well as the above drawings are used to distinguish different objects, rather than to describe a specific order or primary-secondary relationship. In addition, the terms "first" and "second" are merely used for description and shall not be construed as indicating or implying relative importance or implicitly indicating the number of the indicated technical features. Thus, the features defined by the terms "first" and "second" can explicitly or implicitly include one or more features.

The phrase "embodiments" referred to in the present application means that the descriptions of specific features, structures, and features in combination with the embodiments are included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described in the present application may be combined with another embodiment.

As mentioned above, it should be emphasized that when the term "comprise/include" is used in this specification, it is used to clearly indicate the presence of stated features or assemblies, but does not preclude the presence or addition of one or more other features, steps, or groups thereof. As used in the present application, the singular forms "one", "a" and "the" also include plural forms, unless otherwise clearly indicated in the context.

In the present application, the term "and/or" is merely an association relation describing associated objects, which means that there may be three relations, for example, A and/or B may represent three situations: A exists alone, both A and B exist, and B exists alone. In addition, the character "/" in the present application generally indicates that the associated objects before and after the character are in an "or" relation.

Because of advantages such as a high material utilization rate and a large degree of freedom in placement, automated fiber placement technology has been widely used in the production and manufacture of composite structural components in the aerospace field. However, as for a curved-surface structure of a large-curvature panel at the leading edge of the airfoil, as shown in FIGS. 1-3, since the press roller 4 conforms to the curved shape of a curved surface 1 during the placement process, the indent depth at the prepreg fiber tows 3 closest to the central axis 41 of the press roller 4 is the largest. Therefore, the prepreg fiber tows 3 receives the largest placement pressure F, and correspondingly, the forming pressure on the prepreg fiber tows 3 is also the largest. It is known from above that the farther the prepreg fiber tows are away from the central axis 41 of the press roller 4, the smaller the indent depth exerted by the press roller 4 on the prepreg fiber tows 3, therefore the smaller the placement pressure F received by the prepreg fiber tows 3, and correspondingly, the smaller the forming pressure on the prepreg fiber tows 3. Therefore, the placement pressure and forming pressure on the prepreg fiber tows 3 in the strip 2 along the central axis 41 of the press roller 4 are uneven.

Currently, for automated fiber preforming on the similar curved-surface structure having large curvatures, the number of prepreg fiber tows 3 in the strip 2 is typically set during a programming phase based on engineering experience, and the optimal number of prepreg fiber tows 3 in the strip 2 is finally determined through actual multiple trial placements, thereby adjusting the placement pressure and forming pressure of the prepreg fiber tows 3 on the strip 2. In addition, in actual trial placements, the fitting quality of the prepreg fiber tows 3 at the edge or the outermost side with the surface of the curved surface 1 is increased by increasing the placement pressure or raising the placement and fitting-purpose heating temperature.

However, raising the heating temperature causes the increase of the aging tendency of the fiber materials, and increasing the pressure also causes a large deformation of the fibres of the prepreg fiber tows 3 near the central axis 41 of the compaction roll 4, thereby affecting the placement quality. Meanwhile, the method of improving the placement quality by increasing the placement pressure and placing and fitting-purpose temperature requires verification of multiple trial placements on the one hand, and will make force reception and heat reception on the formed whole curved-surface structure more uneven on the other hand, thereby exerting a certain impact on the final performance of the large-curvature composite curved-surface structure. Furthermore, as for the automated fiber placement and formation of the curved-surface structure, a lot of documents have already demonstrated the uniformity of distribution of the placement pressure and/or forming pressure of the strip 2 exerts a large impact on the performance of the formed large-curvature composite curved-surface structure.

Therefore, in order to solve the above problems, the present disclosure provides a method for optimizing parameters in an automated placement process of prepreg fiber tows 3 on a curved-surface structure having a large curvature. by this method, a uniformity function of the placement pressure of the strip 2 is obtained by analyzing the placement pressure for forming the prepreg fiber tows 3 of the curved-surface structure having a large curvature in the placement programing phase, and the uniformity of the placement pressure on the strip 2 in a single layer is optimized. It is possible to, by optimizing the number of prepreg fiber tows 3 in the strip 2 at a position with a relatively larger curvature, improve the uniformity of the placement pressure received by the prepreg fiber tows 3 in the single layer, and facilitate improving the actual placement quality while reducing the times of trial placements.

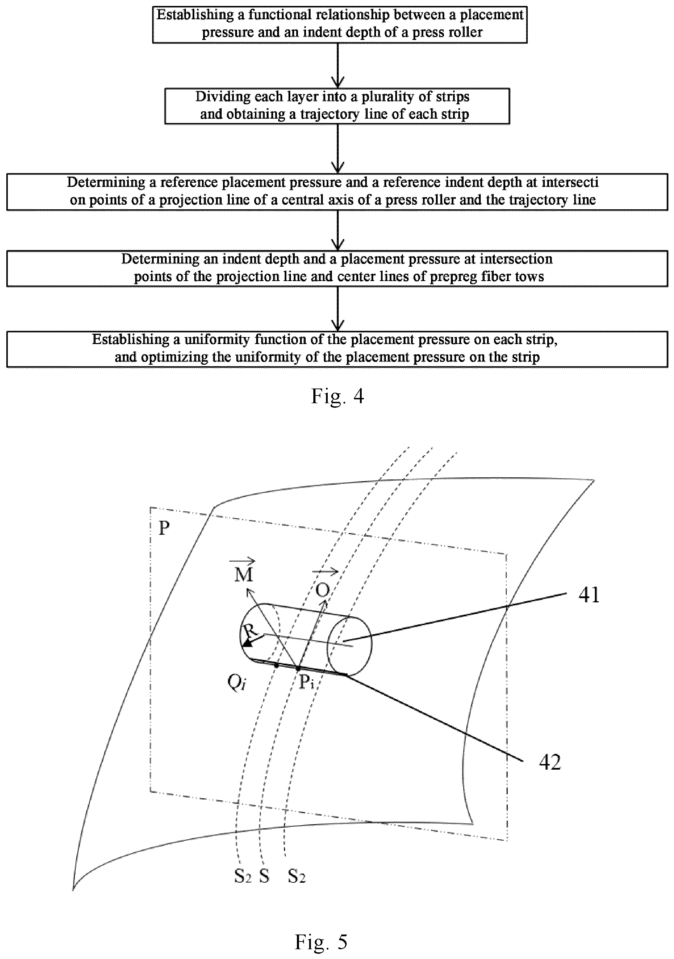

FIG. 4 illustrates a flow chart of a method for optimizing parameters in an automated placement process of prepreg fiber tows 3 on a curved-surface structure having a large curvature according to a preferred embodiment of the present disclosure. As shown in FIG. 4, the method comprises the following steps: establishing a functional relationship between a placement pressure and an indent depth of a press roller; dividing each layer into a plurality of strips 2 by means of a computer and determining a trajectory line of each strip 2; calculating a reference placement pressure and a reference indent depth at an intersection point of a projection line of a central axis 41 of a press roller 4 on each strip 2 and the corresponding trajectory line; calculating an indent depth and a placement pressure at an intersection point of the projection line and a center line of prepreg fiber tows 3 of the strip 2; according to the calculated placement pressure of each intersection point on each strip 2, establishing a uniformity function of the placement pressure on each strip 2, and optimizing the uniformity of the distribution of the placement pressure on each strip 2 according to the uniformity function. A specific process will be further described in detail with reference to the figures of the description.

Referring to FIG. 1 through FIG. 7, as shown in FIG. 4, first, a functional relationship between a placement pressure and an indent depth of a press roller is first established. A specific process thereof comprises: establishing the functional relationship between the placement pressure and the indent depth of the press roller by changing the compression depth of the press roller 4 acting on a planar structure by automatically placing fibers on the planar structure, and measuring the placement pressure on the planar structure corresponding to the respective indent depth, according to a given fiber placement material system, and based on composition and performance of a selected material of the press roller 4. For the planar structure, the forming pressure of the prepreg fiber tows 3 is equal to the set placement pressure F.

In the given fiber placement material system, all prepreg fiber tows 3 are the same, i.e., all prepreg fiber tows 3 are the same in terms of composition and performance, width and thickness. Given that a width of each prepreg fiber tow 3 is $w_0$, a width of the n prepreg fiber tows 3 arranged side by side is $nw_0$. Meanwhile, in the automated fiber placement technology, the material of the press roller 4 may be an elastomer material having elasticity and having different hardness and modulus of elasticity, such as silicone rubber. However, the press rollers 4 of different materials have different sensitivity to the placement pressure, so that the establishment of the functional relationship between the placement pressure and the indent depth of the press roller needs to be based on the composition and performance of the selected material of the press roller 4.

Under the given fiber placement material system, the material of the press roller 4 is selected and a radius of the press roller 4 is set as R shown in FIG. 5. Preferably, a length of the press roller 4 is greater than or equal to a maximum width that can be placed by a placement head of an automated fiber placement machine at a time, and the maximum width corresponds to the number of prepreg fiber tows 3 that can be placed side by side at most. Exemplarily, if the number of the fiber tows of the placement head may be 16, the maximum width that can be placed by the placement head of the automated fiber placement machine at one time is the width formed by 16 prepreg fiber tows 3 arranged side by side, and meanwhile the length of the press roller 4 is greater than the width formed by the 16 prepreg fiber tows 3 arranged side by side.

Then, each layer is divided into a plurality of strips 2 by means of a computer and the trajectory line of each strip 2 is determined. A specific process thereof comprises: on the basis of the length of the press roller 4 and the maximum width that can be placed by the placement head of the automated fiber placement machine at a time, dividing each layer by a computer into a plurality of strips 2 and generating a trajectory line of each strip 2, the trajectory line of each strip 2 corresponding to a path that is followed by the automated fiber placement machine to complete the placement of the strip 2. Each strip 2 has one trajectory line formed by a series of trajectory control points. During actual placement, one single layer typically comprises a plurality of strips 2, each strip 2 being formed by a plurality of prepreg fiber tows 3 arranged side by side, and the press roller 4 completes the placement of the strips 2 along the trajectory line. Exemplarily, each strip 2 comprises four prepreg fiber tows 3 at most. Generally, the more the prepreg fiber tows 3 in the strip 2, the higher the placement efficiency.

Exemplarily, based on automated fiber placement software or other fiber placement trajectory programming software such as "Fibersim" software, for a curved-surface structure of a large-curvature doubly-curved panel, as shown in FIG. 5, according to the shape and size of the curved surface 1 and the press roller 4, each layer is divided into a plurality of strip 2, and a trajectory line S of each strip 2 is generated. The shape and size of the curved surface 1 comprises a length, a width and a curvature of the curved surface 1, and the shape and size of the press roller 4 comprises a length and a radius of the press roller 4. Furthermore, a fiber placement trajectory line $S_2$ for placing a plurality of prepreg fiber tows 3 arranged side by side in the strip 2 is generated according to the divided strips 2 and the trajectory lines S of the strips 2, wherein the fiber placement trajectory line $S_2$ of each prepreg fiber tow 3 of each strip 2 corresponds to a center line of the prepreg fiber tow 3. Preferably, the trajectory line S of the strip 2 is set to coincide with the center line of the prepreg fiber tow 3 located at a central position of the strip 2. More preferably, the trajectory line S of the strip 2 is set to coincide with the center line of the strip 2. A magnitude of an initial placement pressure is set to be a maximum placement pressure borne by the prepreg fiber tows 3 in the strips 2 of one single layer.

Preferably, a 0° fibre layer is first placed on a high-curvature leading-edge panel, a plurality of strips 2 of the 0° fibre layer are produced based on the curved-surface structure and the fiber placement programming, and the trajectory line S of each strip 2 and the center line $S_2$ of each prepreg fiber tow 3 in each strip 2 are extracted.

As shown in FIG. 5, the trajectory line S of the strip 2 and the center line $S_2$ of the prepreg fiber tow 3 of the strip 2 are extracted, wherein a curve equation of the trajectory line S is $E(X, Y, Z)=0$ and a curve equation of the center line $S_2$ of the prepreg fiber tow 3 of the strip 2 is $F(X, Y, Z)=0$.

Then, a reference placement pressure and a reference indent depth at an intersection point of a projection line 42 of the central axis 41 of the press roller 4 on each strip 2 and the trajectory line S of each strip are calculated. A specific process thereof comprises: for each strip 2, projecting the central axis 41 of the press roller 4 on the strip 2 to obtain the projection line 42 of the central axis 41 of the press roller 4. For each strip 2, the intersection point of the projection line 42 and the trajectory line S of the strip 2 is set as a first intersection point, the first intersection point is set as a reference point, the placement pressure at the reference point is set as a reference placement pressure, and the reference indent depth at the first intersection point can be obtained by using the functional relationship between the placement pressure and the indent depth of press roller.

In the present embodiment, one of the plurality of strips 2 is as shown in FIG. 5, the central axis 41 of the press roller 4 is projected on the strip 2 to form the projection line 42 of the central axis 41 of the press roller 4, the projection line 42 intersects with the trajectory line S of the strip 2 to form a first intersection point $P_i$, and meanwhile the projection line intersects with the center line $S_2$ of each prepreg fiber tow 3 of the strip 2 to form a plurality of second intersection points Q. For each strip 2, the step of forming the projection line 42 of the central axis 41 of the press roller 4 on the strip 2 comprises: selecting any point on the trajectory line S of the strip 2 as a reference point $P_i$ at which a normal vector $\vec{M}$ of the curved surface 1 and a tangent vector $\vec{O}$ of the trajectory line S are made. A section plane P of the central axis 41 of the press roller 4 is constructed according to the reference point $P_i$, the normal vector $\vec{M}$, and the tangent vector $\vec{O}$, an intersection line of the section plane P and the strip 2 is the projection line 42, and the central axis 41 of the press roller 4 is also located in the section plane P.

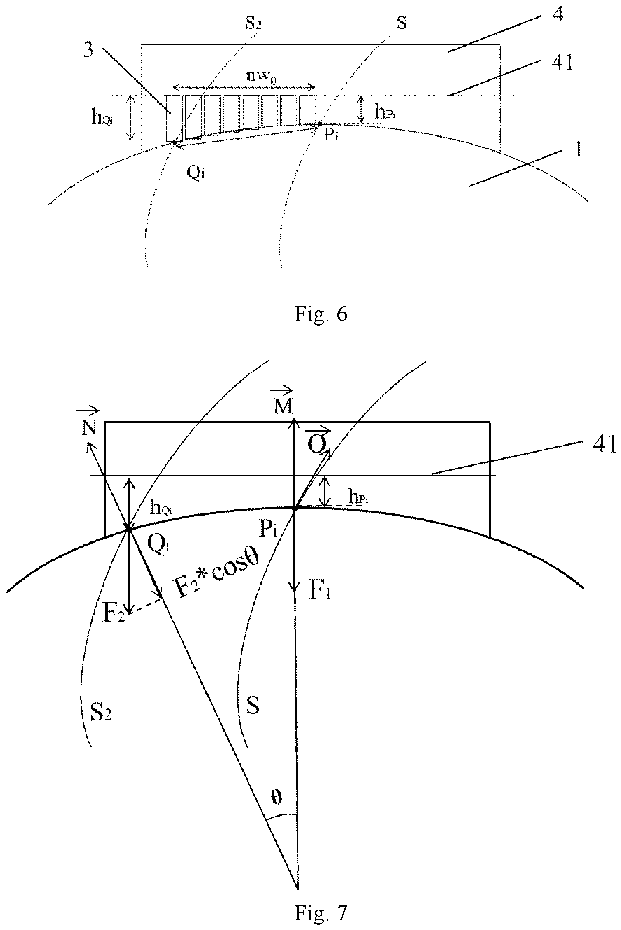

Exemplarily, the above process of forming the projection line 42 can be accomplished by extracting and inputting the trajectory line S of the strip 2 and the center line $S_2$ of each prepreg fiber tow 3 in the strip 2 and inputting them into CATIA software, generating the above section plane P in the CATIA software, and obtaining the intersection line of the section plane P and the strip 2. By setting the placement pressure at the reference point as the reference placement pressure, the reference indent depth at the reference point, i.e., the reference placement pressure and the reference indent depth at the first intersection point, can be obtained by using the functional relationship between the placement pressure and the indent depth of the press roller. As shown in FIG. 7, the reference placement pressure of the reference point $P_i$ on the trajectory line S of the strip 2 is $F_1$.

As another example, the step of forming the projection line 42 of the central axis 41 of the press roller 4 comprises: selecting any trajectory point $P_i(Xi, Yi, Zi)$ on the trajectory line S of the strip 2 as the reference point, and making the normal vector $\vec{M}$ of the curved surface 1 and the tangent vector $\vec{O}$ of the trajectory line S at this point. The central axis 41 of the press roller 4 is perpendicular to the normal vector $\vec{M}$ and the tangent vector $\vec{O}$, and a distance from the reference point is a difference between the radius of the press roller 4 and the reference indent depth, thereby obtaining a curve equation $L(X, Y, Z)=0$ of the central axis 41 of the press roller 4.

The magnitude of the reference placement pressure at the reference point is set as the placement pressure initially set in the programming, and the reference indent depth at the reference point, namely, the distance between the central axis 41 of the press roller 4 and the reference point, can be obtained by using the functional relationship between the placement pressure and the indent depth of the press roller. Preferably, the reference point is set as a geometrical center point of the strip 2. More preferably, the reference placement pressure is set to a maximum placement pressure on the strip 2.

As shown in FIG. 7, the reference placement pressure at the first intersection point $P_i$ on the trajectory line S of the strip 2 is $F_1$. According to the curve equation $L(X, Y, Z)=0$ of the central axis 41 of the press roller 4, the projection line 42 of the central axis 41 of the press roller 4 on the curved surface 1 and the curve equation $G(X, Y, Z)=0$ of the projection line 42 can be obtained.

Preferably, the plurality of strips 2 of the layer are calculated repeatedly according to the above steps to obtain the projection line 42 of the central axis 41 of the press roller 4 on each strip 2, and the reference placement pressure and the indent depth of the press roller at the first intersection point on each strip 2 are calculated.

Then, for each strip, the indent depth and the placement pressure at the intersection point of the projection line 42 of the central axis 41 of the press roller 4 on the strip 2 and the center line of the prepreg fiber tows 3 of the strip 2 are calculated. A specific process thereof comprises: setting an intersection point of the projection line 42 and the center line of each prepreg fiber tow 3 of the strip 2 as a second intersection point, and calculating based on the reference indent depth and according to a distance between the second intersection point and the first intersection point to obtain the indent depth at the second intersection point, and then obtaining the placement pressure corresponding to the indent depth at the second intersection point by using the functional relationship between the placement pressure and the indent depth of the press roller. For each strip 2, the projection line 42 intersects the plurality of prepreg fiber tows 3 in the strip 2 to form a plurality of said second intersection points.

Exemplarily, the step of calculating the indent depth at the second intersection point comprises: sequentially calculating to obtain a distance from the intersection point of the section plane P and the center line of the prepreg fiber tows 3 of the strip 2 to the central axis 41 of the press roller 4, and calculating according to the radius R of the press roller 4 to obtain a value of the indent depth of the press roller at each second intersection point, namely, a value of the indent depth of the press roller at the center lines of different prepreg fiber tows 3 in the strip 2.

As shown in FIG. 6-FIG. 7, taking the second intersection point $Q_i$ of any one of the prepreg fiber tows 3 in the strip 2 and the projection line 42 as an example, the indent depth at the point $Q_i$ is calculated by the following equation, and then, the placement pressure at the second intersection point is calculated according to the relationship between the placement pressure and the indent depth of the press roller. As shown in FIG. 7, the placement pressure at the second intersection point Qi is $F_2$. According to the above steps, the indent depth and the placement pressure at the second intersection point on each prepreg fiber tow 3 in the strip 2 is calculated.

$$R - h_{Q_i} = R - h_{P_i} - \sqrt{|P_iQ_i|^2 - (nw_0)^2} \qquad (1)$$

wherein R is a radius of the press roller 4, $h_{Q_i}$ is a distance between the second intersection point and the central axis 41 of the press roller 4, $h_{P_i}$ is a distance between the first intersection point and the central axis 41 of the press roller 4, $P_iQ_i$ is a spatial distance between the first intersection point and the second intersection point under a Cartesian coordinate system, and $nw_0$ is a width formed by the plurality of prepreg fiber tows 3 arranged side by side between the first intersection point and the second intersection point.

Alternatively, for each strip 2, the second intersection point $Q_j(xi, yi, zi)$ formed by the intersection of the projection line 42 with the prepreg fiber tows 3 of the strip 2 is obtained by calculating according to the curve equation of the projection line 42 and the curve equation of the center line of the prepreg fiber tows 3 of the strip 2. A distance component of the distance between the second intersection point and the first intersection point in a vertical plane of the Cartesian coordinate system is calculated, the distance component is subtracted from the indent depth at the first intersection point to obtain the indent depth at the second intersection point, and then the placement pressure at the second intersection point is calculated according to the relationship between the placement pressure and the indent depth of the press roller. According to the above steps, the indent depth and the placement pressure at the second intersection point on each prepreg fiber tow 3 in the strip 2 is calculated.

Preferably, the calculation is repeated for the plurality of strips 2 of the layer according to the above steps, to obtain the projection line 42 of the central axis 41 of the press roller 4 on each strip 2, and the reference placement pressure and the indent depth of the press roller at the plurality of second intersection points on each strip 2 are calculated.

Then, according to the calculated placement pressures at the first intersection point and all second intersection points on the strips 2, a uniformity function of the placement pressure on each strip 2 is established, and the uniformity of the distribution of the placement pressure on each strip 2 is optimized according to the uniformity function. A specific process thereof comprises: obtaining a maximum-minimum difference of the placement pressures and an average placement pressure on the strips 2 according to the placement pressures at the first intersection points and the second intersection points, and establishing the uniformity function of the placement pressure on each strip 2 using a ratio of the maximum-minimum difference of the placement pressures and the average placement pressure, and optimizing the uniformity of the placement pressure on the strips 2 according to the uniformity function. The value of the maximum-minimum difference of the placement pressures is a difference value between a maximum value and a minimum value in placement pressure values of the first intersection points and the second intersection points, and the average placement pressure value is a ratio of a sum of the placement pressure values of the first intersection points and the second intersection points to a number of intersection points including the first intersection points and the second intersection points.

Specifically, the uniformity function $U$ of the distribution of the placement pressure of the strip 2 in the direction of the central axis of the press roller 4 at the point $P_i$ defined can be calculated by the following equation. The larger the value of U, the more uniform the placement pressure on the strip 2.

$$U = 1 - \frac{F_{max} - F_{min}}{F_{aver}}$$

$$(2)$$

where $F_{max}$ represents a maximum placement pressure value at all the intersection points, $F_{min}$ represents a minimum placement pressure value at all the intersection points, and $F_{aver}$ represents an average value of the placement pressures at the intersection points on the strip 2.

The placement pressure at any point on the trajectory line S of the strip 2 and the placement pressure at any point on the prepreg fiber tows 3 on the strip 2 can be calculated according to the uniformity function of the placement pressure to obtain a placement pressure distribution on the strip 2. For a layer at an angle, with the strip 2 with the highest distribution uniformity of placement pressure (i.e., the maximum U value) as a reference, the uniformity of distribution of the overall placement pressure of the strip 2 can be improved by adjusting the number of the prepreg fiber tows 3 in the strip 2 at a position with a relatively larger curvature, thereby ensuring the uniform distribution of the placement pressure of the prepreg fiber tows 3 of the whole curved-surface structure.

Exemplarily, the uniformity of distribution of the placement pressure of the prepreg fiber tows 3 of the respective strips 2 of the 0° layer can be obtained by the above method. The value of $U$ is increased by adjusting the number of prepreg fiber tows 3 in the strip 2 at a position with a larger cuvature, thereby improving the uniformity of the placement pressure borne by the prepreg fiber tows of the whole layer. Specifically, the step of optimizing the uniformity of the placement pressure on each strip 2 according to the uniformity function comprises: changing the number of the second intersection points by adjusting the number of the plurality of prepreg fiber tows 3 forming each strip 2, thereby changing the value of the maximum-minimum difference of the placement pressures and the average placement pressure value on each strip 2 such that the distribution of the placement pressure on each strip 2 is uniform.

The method further comprises optimizing the distribution of the placement pressure on the strip 2 by adjusting the number of prepreg fiber tows of the strip at the position with a relatively larger curvature, according to the uniformity function. Then, the number of the prepreg fiber tows 3 of the strip 2 at a position with a relatively smaller curvature is increased appropriately according to the optimized number of the prepreg fiber tows 3 of the strip 2 at the position with the relatively larger curvature, so as to optimize the distribution of the placement pressure on the strip 2 at the position with a relatively smaller curvature by using the uniformity function, thereby ensuring the quality of the curved-surface structural component while reducing the times of trial placements.

The method further comprises laying the optimized plurality of strips 2 side by side with each other to form a layer with uniform distribution of the placement pressure, and laying and compacting a plurality of layers one by one, thereby obtaining a curved-surface structure having a large curvature with uniform distribution of the placement pressure.

In addition, as shown in FIG. 7, the normal vector $\vec{N}$ of the curved surface 1 is made at the second intersection point, i.e., point $Q_i$, where an angle between $\vec{N}$ and $\vec{M}$ is θ. When the placement pressure exerted on the prepreg fiber tows 3 at the point $Q_i$ is $F_2$, the forming pressure at the point $Q_i$ is a component force of the placement pressure $F_2$, i.e., $F_2*cosθ$, on a straight line where $\vec{N}$ lies. The force causes the prepreg fiber tows 3 to slip during placement, and therefore is prone to cause wrinkles or gaps.

When the placement pressure exerted on the prepreg fiber tows 3 at the $P_i$ point is $F_1$, the forming pressure at point $P_i$ is a component force of the placement pressure $F_1$ on a straight line where $\vec{M}$ lies. Exemplarily, as shown in FIG. 7, the forming pressure at point $P_i$ is equal to the placement pressure, and both are $F_1$. In general, the forming pressure at the first intersection point and/or the second intersection point on each strip 2 is a component of the placement pressure in the normal direction of the curved surface at the first intersection point and/or the second intersection point. Preferably, the forming pressure at each second intersection point can be calculated according to the placement pressure at each second intersection point on the strip 2.

When the trajectory line S of the strip 2 coincides with the center line of the prepreg fiber tow 3 at the central position of the strip 2 and the point $P_i$ is any point on the trajectory line S, or the point $P_i$ is a geometric center point of the strip 2; when the point $Q_i$ is located at an edge of the strip 2 or the center line of the outermost prepreg fiber tow 3, a uniformity distribution function $U_S$ of the forming pressure of the strip 2 may also be calculated using the following equation.

$$U_S = 1 - \frac{F_1 - F_2 * \cos\theta}{F_{Saver}} \qquad (3)$$

where $F_i$ is the forming pressure at the point $P_i$, $F_2 * \cos\theta$ is the forming pressure at the point $Q_i$, and $F_{saver}$ is an average value of the forming pressures at the point $P_i$ and all points $Q_i$.

Preferably, the value of $U_S$ is increased by adjusting the number of prepreg fiber tows 3 in the strip 2 at a position with a relatively larger curvature, thereby increasing the uniformity of the forming pressure of the prepreg fiber tows 3 of the whole layer. Specifically, the step of optimizing the uniformity of the forming pressure on each strip 2 according to a uniformity function of the forming pressure comprises: changing the number of the second intersection points $Q_i$ and the angle $\theta$ by adjusting the number of the plurality of prepreg fiber tows 3 forming each strip 2, thereby changing a forming pressure maximum-minimum difference value and an average forming pressure value on each strip 2 so that the forming pressure distribution of the prepreg fiber tows 3 of each strip 2 is uniform.

As compared with the conventional method of analyzing the placement pressure or forming pressure distribution in the automated placement process by means of finite element analysis or actual measurement, the present disclosure can obtain the placement pressure distribution of any one strip 2 on a single placement curved surface and the magnitude of the placement pressure at the central point of the prepreg fiber tows 3 of the strip 2 by using the CATIA processing software based on the functional relationship between the placement pressure and the indent depth measured in the flat panel structure, so that the analysis operation of the placement pressure is simple and easy to implement.

For one single layer, the maximum placement pressure borne by the prepreg fiber tows 3 depends on the placement pressure value set in the programming, and the number of prepreg fiber tows 3 in the strip 2 determines the magnitude of the minimum placement pressure borne by the prepreg fiber tows 3. Therefore, after a fiber placement process is generated, it is possible to, by this method, optimize the set value of the placement pressure and the number of prepreg fiber tows 3 in the strip 2 at a position with a relatively larger curvature, and thereby obtain the strips 2 with a uniform distribution of placement pressure and forming pressure simply and quickly. The method according to the present disclosure reduces the workload while effectively improving the efficiency of iteration as compared with the traditional method of optimizing parameters through multiple trial placements.

In addition, as compared with the conventional method using finite element analysis or actually-measured placement pressure, the method of the present disclosure provides for a more rapid and accurate analysis of the placement pressure of the prepreg fiber tows 3 in curved-surface structures. After a fiber placement path is generated, the distribution uniformity of the placement pressure of the curved-surface structure is analyzed, the set value of the placement pressure and the set value of the number of the prepreg fiber tows 3 in the strip 2 are optimized in advance, thereby reducing the times of trial placements and improving the actual placement quality. Furthermore, the pressure analysis of the prepreg fiber tows 3 is based on the already-generated fiber placement path, and the fiber placement path may also be iteratively optimized reversely according to the pressure distribution results of the prepreg fiber tows 3 in a single layer, thereby significantly improving the quality of the formed large-curvature composite structural components and the iteration efficiency of the placement process of the prepreg fiber tows 3.

Furthermore, the distribution of the forming pressure of the prepreg fiber tows 3 on each strip 2 in the fiber placement process of the curved-surface structure is given on the basis of the generated fiber placement process of forming the trajectory line S of the strips 2 and the center line $S_2$ of the prepreg fiber tows 3 in a single layer. In this way, with reference to the maximum forming pressure value of the strip 2 at a certain fiber angle, it is possible to, by adjusting the number of prepreg fiber tows 3 in the strip 2 at a position with a relatively larger curvature, improve the uniformity of the forming pressure of the prepreg fiber tows 3 in the whole layer at a fixed fiber angle, reduce the times of trial placements and avoid the damage to the prepreg fiber tows 3 caused by the forming pressure, thereby ensuring the placing and fitting quality and the quality of the formed large-curvature composite structural components.

Although specific embodiments of the present disclosure have been described above, it should be appreciated by those skilled in the art that these specific embodiments are merely exemplary and that the scope of the present disclosure is defined by the appended claims. Without departing from the principles and spirit of the present disclosure, those skilled in the art may make various variations or modifications to these embodiments, but these variations and modifications all fall within the scope of the present disclosure.

**Claims**

1. A method for optimizing parameters in an automated placement process of prepreg fiber tows on a curved surface structure having a large curvature, wherein the method comprises the steps of:

   establishing a functional relationship between a placement pressure and an indent depth of a press roller by automatically placing fibers on a planar structure based on composition and performance of a selected material of the press roller;

   dividing each layer into a plurality of strips by means of a computer, wherein a trajectory line of each of the strips corresponds to a path that is followed by an automated fiber placement machine to complete the placement of the strips, and wherein each of the strips is formed by a plurality of prepreg fiber tows arranged side by side;

   projecting a central axis of the press roller onto the plurality of strips so as to obtain a projection line of the central axis of the press roller, wherein, for each of the strips, an intersection point of the projection line and the trajectory line of the strip is set as a first intersection point, the placement pressure at the first intersection point is set as a reference placement pressure, and a reference indent depth at the first intersection point is obtained by using the functional relationship between the placement pressure and the indent depth of the compaction roller;

   setting an intersection point of the projection line and a center line of each prepreg fiber tow of the strip as a second intersection point, and based on the reference indent depth, calculating the indent depth at the second intersection point according to a distance between the second intersection point and the first intersection point, and then obtaining a placement pressure at the second intersection point using the functional relationship between the placement pressure and the indent depth of the press roller;

   obtaining a maximum-minimum difference of the placement pressures and an average placement pressure on each strip according to the placement pressures at the first intersection point and at the second intersection point;

   establishing a uniformity function of the placement pressure on each strip by using a ratio of the maximum-minimum difference of the placement pressures to the average placement pressure, and optimizing the uniformity of the placement pressure on the strip according to the uniformity function.

2. The method according to claim 1, wherein a material of the press roller is an elastomeric material having elasticity.

3. The method according to claim 1, wherein each layer is divided into a plurality of strips by using an automated fiber placement software or other fiber placement trajectory programming software in order to generate the trajectory line of each strip and a fiber placement trajectory which is used for placing the prepreg fiber tows and corresponds to the center line of each prepreg fiber tow in each strip.

4. The method according to claim 3, wherein the plurality of strips corresponding to each layer are divided according to the shape and size of the curved-surface structure having a large curvature and the shape and size of the compaction roller, and then the trajectory line of each strip is generated accordingly.

5. The method according to claim 4, wherein the shape and size of the curved-surface structure having a large curvature comprises a length, a width and a curvature of the curved surface, and the shape and size of the press roller comprises a length and a radius of the press roller.

6. The method according to claim 1, wherein the trajectory line of each strip is configured to coincide with the center line of each strip.

7. The method according to claim 1, wherein the step of forming a projection line of the central axis of the press roller comprises:

   selecting any point on the trajectory line of each strip as a reference point, making a normal vector of the curved surface and a tangent vector of the trajectory line at the reference point, and constructing a section plane of the central axis of the press roller according to the normal vector, the tangent vector and the central axis of the press roller, wherein an intersection line between the section plane and the strip is the projection line.

8. The method according to claim 7, wherein the reference point is set as a geometrical center point of the strip.

9. The method according to claim 8, wherein the reference placement pressure is set to a maximum placement pressure on the strip.

10. The method according to claim 1, wherein the projection line intersects the plurality of prepreg fiber tows in each strip to form a plurality of said second intersection points.

11. The method according to claim 1, wherein the step of obtaining the indent depth at the second intersection point comprises:

calculating a distance component of a distance between the second intersection point and the first intersection point in a vertical plane of a Cartesian coordinate system, and subtracting the distance component from the indent depth at the first intersection point to obtain the indent depth at the second intersection point.

12. The method according to claim 1, wherein the step of optimizing the uniformity of the placement pressure on each strip according to the function model comprises:

changing the number of the second intersection points by adjusting the number of the plurality of prepreg fiber tows forming each strip, and changing the value of the maximum-minimum difference of the placement pressures and the average placement pressure value on each strip such that the distribution of the placement pressure on each strip is uniform.

13. The method according to claim 12, wherein the value of the maximum-minimum difference of the placement pressures is a difference value between a maximum value and a minimum value of the placement pressure values at the first intersection point and the second intersection points, and the average placement pressure value is a ratio of a sum of the placement pressure values at the first intersection point and the second intersection points to a number of intersection points comprising the first intersection point and the second intersection points.

14. The method according to claim 13, wherein the method further comprises the step of:

optimizing the distribution of the placement pressure on the strip by adjusting the number of the prepreg fiber tows of the strip at a position with a relatively larger curvature according to the uniformity function, and appropriately increasing the number of the prepreg fiber tows of the strip at a position with a relatively smaller curvature, to optimize the distribution of the placement pressure on the strip at the position with a relatively smaller curvature using the uniformity function.

15. The method according to claim 1, wherein the method further comprises the step of:

laying the optimized plurality of strips side by side to form a layer with a uniform distribution of the placement pressure, and laying and compacting a plurality of layers one by one, so that the curved-surface structure having a large curvature with uniform distribution of the placement pressure is obtained.

16. The method according to claim 1, wherein the forming pressure at the first intersection point and/or the second intersection point is a component of the placement pressure in a normal direction of the curved surface at the first intersection point and/or the second intersection point.

Fig. 1

Fig. 2

Fig. 3

Establishing a functional relationship between a placement
pressure and an indent depth of a press roller

↓

Dividing each layer into a plurality of strips
and obtaining a trajectory line of each strip

↓

Determining a reference placement pressure and a reference indent depth at intersecti
on points of a projection line of a central axis of a press roller and the trajectory line

↓

Determining an indent depth and a placement pressure at intersection
points of the projection line and center lines of prepreg fiber tows

↓

Establishing a uniformity function of the placement pressure on each strip,
and optimizing the uniformity of the placement pressure on the strip

Fig. 4

Fig. 5

Fig. 6

Fig. 7

## INTERNATIONAL SEARCH REPORT

| | International application No. |
|---|---|
| | **PCT/CN2023/123291** |

| A. | CLASSIFICATION OF SUBJECT MATTER |
|---|---|

B29C 70/30(2006.01)i

According to International Patent Classification (IPC) or to both national classification and IPC

| B. | FIELDS SEARCHED |
|---|---|

Minimum documentation searched (classification system followed by classification symbols)

IPC:B29C

Documentation searched other than minimum documentation to the extent that such documents are included in the fields searched

Electronic data base consulted during the international search (name of data base and, where practicable, search terms used)

CNTXT, ENTXT, ENTXTC, VEN, WPABSC, CNKI: 参数, 高度, H, 辊, 函数, 力, 铺放, 铺放压力, 深度, 压辊深度, 压辊压深, 压力, 压深, 优化, 预浸料, 预浸料丝, 预浸料丝束, 自动铺放预浸料, laying processing, fiber tows, pre-impregnated tow, press+, depth

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 105437570 A (JIANGSU HENGSHEN CO., LTD.) 30 March 2016 (2016-03-30) claim 1, and description, paragraphs [0009]-[0023] | 1-16 |
| A | CN 102529115 A (HARBIN INSTITUTE OF TECHNOLOGY) 04 July 2012 (2012-07-04) entire document | 1-16 |
| A | CN 111497283 A (HAIYING AEROSPACE MATERIALS RESEARCH INSTITUTE (SUZHOU) CO., LTD.) 07 August 2020 (2020-08-07) entire document | 1-16 |
| A | CN 112192864 A (AEROSPACE RESEARCH INSTITUTE OF MATERIALS & PROCESSING TECHNOLOGY) 08 January 2021 (2021-01-08) entire document | 1-16 |
| A | CN 114433709 A (BEIJING INSTITUTE OF COLLABORATIVE INNOVATION et al.) 06 May 2022 (2022-05-06) entire document | 1-16 |
| A | US 2012251823 A1 (MALDONADO FREDDY et al.) 04 October 2012 (2012-10-04) entire document | 1-16 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 November 2023** | **03 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/123291**

### C. DOCUMENTS CONSIDERED TO BE RELEVANT

| Category* | Citation of document, with indication, where appropriate, of the relevant passages | Relevant to claim No. |
|---|---|---|
| A | US 2017043539 A1 (GENERAL ELECTRIC COMPANY) 16 February 2017 (2017-02-16) entire document | 1-16 |
| A | US 2019255784 A1 (BELL HELICOPTER TEXTRON INC.) 22 August 2019 (2019-08-22) entire document | 1-16 |
| A | US 2019318444 A1 (UNTITED STATES OF AMERICA AS REPRESENTED BY THE ADMINISTRATOR OF NASA) 17 October 2019 (2019-10-17) entire document | 1-16 |

Form PCT/ISA/210 (second sheet) (July 2022)

**INTERNATIONAL SEARCH REPORT**
Information on patent family members

International application No.

**PCT/CN2023/123291**

| Patent document cited in search report | | | Publication date (day/month/year) | Patent family member(s) | | | Publication date (day/month/year) |
|---|---|---|---|---|---|---|---|
| CN | 105437570 | A | 30 March 2016 | None | | | |
| CN | 102529115 | A | 04 July 2012 | None | | | |
| CN | 111497283 | A | 07 August 2020 | None | | | |
| CN | 112192864 | A | 08 January 2021 | None | | | |
| CN | 114433709 | A | 06 May 2022 | None | | | |
| US | 2012251823 | A1 | 04 October 2012 | None | | | |
| US | 2017043539 | A1 | 16 February 2017 | JP | 2017061140 | A | 30 March 2017 |
| | | | | JP | 6505058 | B2 | 24 April 2019 |
| | | | | EP | 3141378 | A2 | 15 March 2017 |
| | | | | EP | 3141378 | A3 | 03 May 2017 |
| | | | | EP | 3141378 | B1 | 03 April 2019 |
| | | | | CA | 2938230 | A1 | 12 February 2017 |
| | | | | CA | 2938230 | C | 04 December 2018 |
| | | | | BR | 102016018528 | A2 | 08 August 2017 |
| | | | | US | 10399276 | B2 | 03 September 2019 |
| US | 2019255784 | A1 | 22 August 2019 | US | 11167505 | B2 | 09 November 2021 |
| | | | | CA | 2997075 | A1 | 22 August 2019 |
| | | | | CA | 2997075 | C | 02 March 2021 |
| US | 2019318444 | A1 | 17 October 2019 | US | 10872391 | B2 | 22 December 2020 |
| | | | | US | 2021125302 | A1 | 29 April 2021 |
| | | | | US | 11373264 | B2 | 28 June 2022 |

Form PCT/ISA/210 (patent family annex) (July 2022)